# EUROPEAN PATENT SPECIFICATION

(11) **EP 4 283 267 B1**
(45) Date of publication and mention of the grant of the patent: **24.12.2025**
(21) Application number: 22305780.3
(22) Date of filing: 25.05.2022
(51) Int. Cl.: G01K 1/02, G01K 1/16, G01K 1/20, G01K 3/00, G01K 3/14, H01R 9/00, H02G 3/00, H02G 15/00, G01K 1/143, H02G 3/16

(54) **CROSS-BONDING BOX INTEGRITY MONITORING**
ÜBERWACHUNG DER INTEGRITÄT VON CROSS-BONDING-BOXEN
SURVEILLANCE DE L'INTÉGRITÉ DE BOÎTIER DE LIAISON CROISÉE

(43) Date of publication of application: 29.11.2023
(73) Proprietor: Nexans, 92400 Courbevoie (FR)
(72) Inventor: GASPARI, Roberto, 1182 Oslo (NO)
(74) Representative: Acapo Onsagers AS

(56) References cited:
- WO-A1-2016/008542
- DE-U1- 202021 103 459
- US-A1- 2017 313 160

## Description

### FIELD OF THE INVENTION

The present invention relates to measurement of temperature of cross-bonding box elements.

### BACKGROUND OF THE INVENTION

To limit losses on the energy transport link and for safety of operations the cable sheaths are earthed in multiple positions in a sealed metallic environment such as a cross-bonding box. During operations, the connections may become loose and generate increased local electrical resistance that might generate heat, local deformation, internal fires, or very high currents, leading to the destruction of the different parts within the cross-bonding box. It is desirable to identify at an early stage increase of local electrical resistance and increases of spot temperature at those locations.

High voltage (HV) cables are always provided with an integral metallic sheath to ensure that the electric stress distribution within the insulation attains radial symmetry and is confined to the insulation for safety reasons and to provide an essential ground return path.

WO2019157619A1 by Zhang et al. disclose a bushing comprising a conductor and an insulating layer which wraps around the conductor. The bushing further comprises a groove arranged between the conductor and the insulating layer, and the bushing also comprises a measuring assembly received in the groove and surrounding the conductor, wherein the measuring assembly includes at least one measuring apparatus. Each measuring apparatus comprises a temperature sensor configured to measure a temperature of the conductor and a passive wireless communication module configured to transmit the measured temperature. The temperature of the bushing can be measured accurately and effectively, thereby improving the reliability and safety of the bushing as well as the electrical device such as switchgear.

EP3910306 A1 by Ferraro et al disclose embodiments for monitoring the condition of an electrical apparatus based on an estimated temperature of a conductor in the electrical apparatus, and comprise receiving a measured temperature value from a first thermal sensor disposed in the electrical apparatus and configured to sense temperature at a location separated from the conductor by an insulator, generating an estimated conductor temperature value based on applying a nonlinear model to the measured temperature value, and monitoring the condition of the electrical apparatus based on the estimated conductor temperature. The nonlinear model may comprise a Hammerstein Wiener model.

Document WO 2016/008542 A1 discloses an electrical cable link apparatus and an electrical cable system comprising the apparatus.

Document DE 20 2021 103459 U1 discloses a device for measuring the temperature of a cable connection of an electric drive.

Document US 2017/313160 A1 discloses a heating device with an integrated temperature sensor.

The present invention aims at improving measurement of local temperature of cross-bonding box elements to ensure the integrity of the cross-bonding box and to improve the reliability of the cross-bonding box.

### SUMMARY OF THE INVENTION

The present invention relates to a cross-bonding box according to claim 1.

The waterproof housing may be made of a thermally conductive material.

The waterproof housing may be made of a metal.

The housing comprises a base section and a lid section. The base section may comprise a bottom plate and a number of side plates extending from the bottom plate. The lid may be releasably connected to the side plates on the opposite side of the base plate. The bottom plate, the side plates and the lid together define a waterproof housing in which the conductor clamps are located.

According to the invention, the second end of the heat transfer means is thermally connected to the housing contact area of the inner surface of the side plate and the thermal sensing unit is arranged on the outer surface of the side plate adjacent to the housing contact area of the inner surface.

In one aspect, electrical insulator is positioned between the first end of the heat transfer means and the conductor clamp.

In one aspect, electrical insulator is positioned between the second end of the heat transfer means and the inner surface of the waterproof housing.

In one aspect, the monitoring system comprises:
- one heat transfer means for each conductor clamp located within the waterproof housing;

wherein the first end of the respective heat transfer means is thermally connected to the respective conductor clamps;
wherein the second end of the respective heat transfer means is thermally connected to individual housing contact areas of the inner surface of the waterproof housing; wherein the individual housing contact areas are spaced apart from each other.

In one aspect, the individual housing contact areas are spaced apart to avoid that the temperature of one conductor clamp is affecting the temperature measured by more than one thermal sensing unit.

In one aspect, the monitoring system comprises:
- one heat transfer means for each conductor clamp located within the waterproof housing;

wherein the first end of the respective heat transfer means is thermally connected to the respective conductor clamps;
wherein the second ends of two or more heat transfer means are thermally connected to a common housing contact area of the inner surface of the waterproof housing;
wherein the common housing contact areas are spaced apart from each other.

In one aspect, the monitoring system comprises:
- one heat transfer means for each earthing bar bridge located within the waterproof housing;

wherein the first end of the respective heat transfer means is thermally connected to the respective earthing bar bridges;
wherein the second end of the respective heat transfer means is thermally connected to individual housing contact areas of the inner surface of the waterproof housing; wherein the individual housing contact areas are spaced apart from each other.

In one aspect, the monitoring system comprises:
- one heat transfer means for each earthing bar bridge located within the waterproof housing;

wherein the first end of the respective heat transfer means is thermally connected to the respective earthing bar bridges;
wherein the second ends of two or more heat transfer means are thermally connected to a common housing contact area of the inner surface of the waterproof housing;
wherein the common housing contact areas are spaced apart from each other.

In one aspect, the heat transfer means is a metal bar or a heat pipe.

In one aspect, the monitoring system comprises an electrical insulator connected between
- the first end of the heat transfer means and the conductor clamp;
- the first end of the heat transfer means and the earthing bar bridge; and/or
- the second end of the heat transfer means and the housing.

The electrical insulator may be a cap insulator.

In one aspect, the electrical insulator of the heat transfer means is a dielectric material.

The electrical insulator may be made of polyethylene or cross-linked polyethylene.

The electrical insulator may be a thin layer of dielectric material with a thickness of a few microns.

In one aspect, the thermal sensing unit is configured to measure a parameter representative of the temperature of the conductor clamp or the earthing bar bridge located within the waterproof housing.

The thermal sensing unit may be provided in communication with a signal processing unit.

In one aspect, an additional thermal sensing unit is arranged on the outer surface of the waterproof housing at a distance from the housing contact area of the inner surface, wherein the additional thermal sensing unit is configured to measure an ambient temperature of the housing.

The signal processing unit may be configured to monitor the temperature difference between the temperature measured at a housing contact area and the ambient temperature measured by the additional sensing unit. The signal processing unit triggers an alarm if a critical temperature difference is exceeded.

The present invention also relates to a method of retrofitting a monitoring system to a cross-bonding box comprising the following steps:
- providing a heat transfer means having a first end and a second end;
- thermally connecting the first end of the heat transfer means to a conductor clamp or an earthing bar bridge;
- thermally connecting the second end of the heat transfer means to a housing contact area of an inner surface of the waterproof housing;
- insulating electrically the conductor clamp or the earthing bar bridge from the housing;
- arranging a thermal sensing unit on an outer surface of the waterproof housing adjacent to the housing contact area of the inner surface.

The method may comprise the step of:
- arranging an additional thermal sensing unit on the outer surface of the waterproof housing at a distance from the housing contact area; wherein the additional thermal sensing unit measures is configured to measure the ambient temperature.

### DETAILED DESCRIPTION

Different embodiments of the invention will now be described in detail with reference to the enclosed drawings, wherein:
Fig. 1 is a perspective view of a prior-art cross-bonding box where the lid has been removed;
Fig. 2a is a schematic top view of a first embodiment of the cross-bonding box and the monitoring system, where the lid has been removed;
Fig. 2b is a schematic top view of a second embodiment of the cross-bonding box and the monitoring system, where the lid has been removed;
Fig. 2c is a schematic top view of a third embodiment of the cross-bonding box and the monitoring system, where the lid has been removed;
Fig. 2d is a schematic top view of a fourth embodiment of the cross-bonding box and the monitoring system, where the lid has been removed;
Fig. 2e is a schematic top view of a fifth embodiment of the cross-bonding box and the monitoring system, where the lid has been removed;
Fig. 3 shows an enlarged view of the area denoted B-B in Fig 2a;
Fig. 4 shows a cross sectional side view (along line A-A in Fig 2a) of the cross-bonding box with the connection of the high voltage cables and the position of the heat conduction means;
Fig. 5 depicts a flow chart of the thermal sensing units and the signal processing unit.

### A cross-bonding box

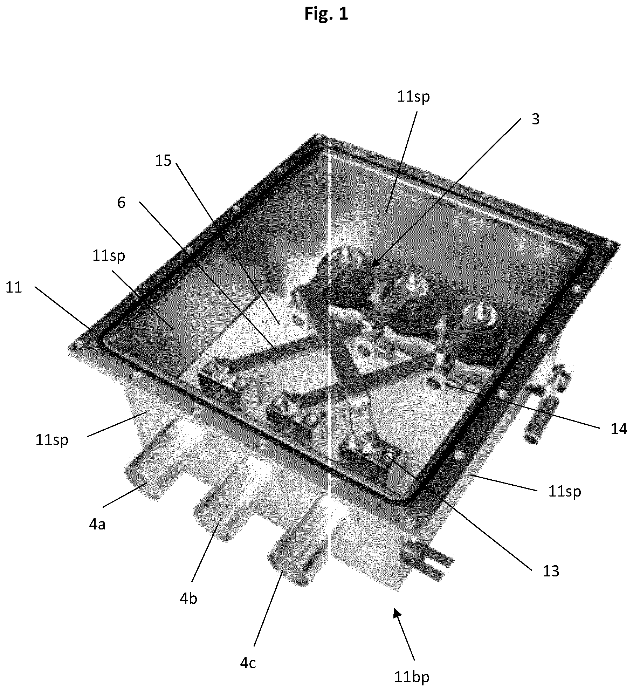

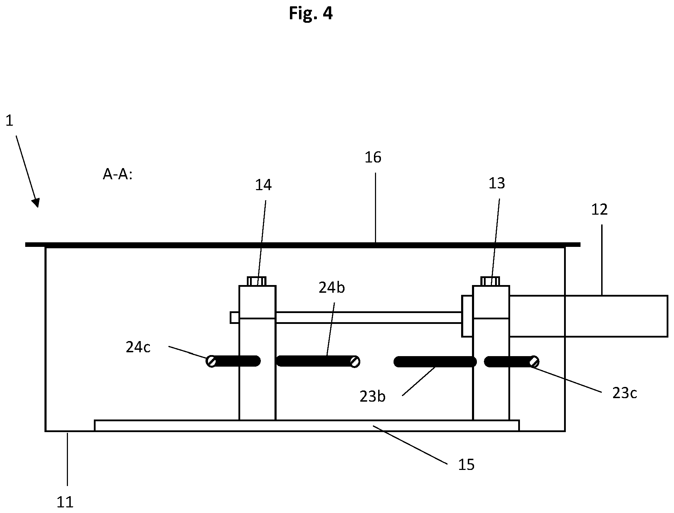

Shown in fig. 1 is a prior-art cross-bonding box. The cross-bonding box comprises a waterproof housing 11 with a base section and a lid 16, see also fig 4. The base section may comprise a bottom plate 11bp and several side plates 11sp extending from the bottom plate 11bp. The lid 16 may be releasably connected to the side plates on the opposite side of the base plate. The bottom plate 11bp, the side plates 11sp and the lid 16 together define a waterproof housing 11 in which the conductor clamps 13, 14 are located. Moreover, the housing 11 in fig. 1 comprises openings 4a, 4b and 4c for guiding ends of high voltage cables 12 from the outside of the housing to the respective conductor clamps 13, 14 inside the housing 11. The cross-bonding box comprises a base plate 15 secured to the bottom plate 11bp, where earthing bar bridges 6, sheath voltage limiters 3, and inner conductor clamps 14 and outer conductor clamps 13 are mounted to the base plate 15.

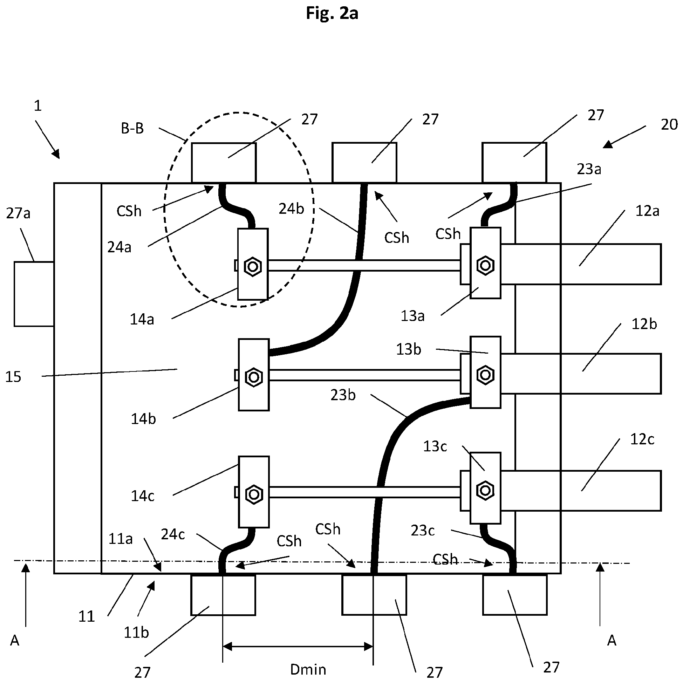

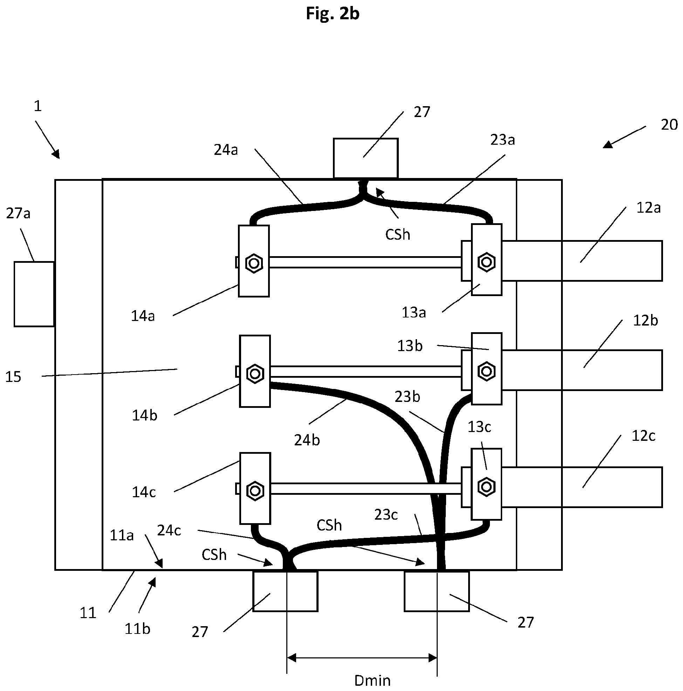

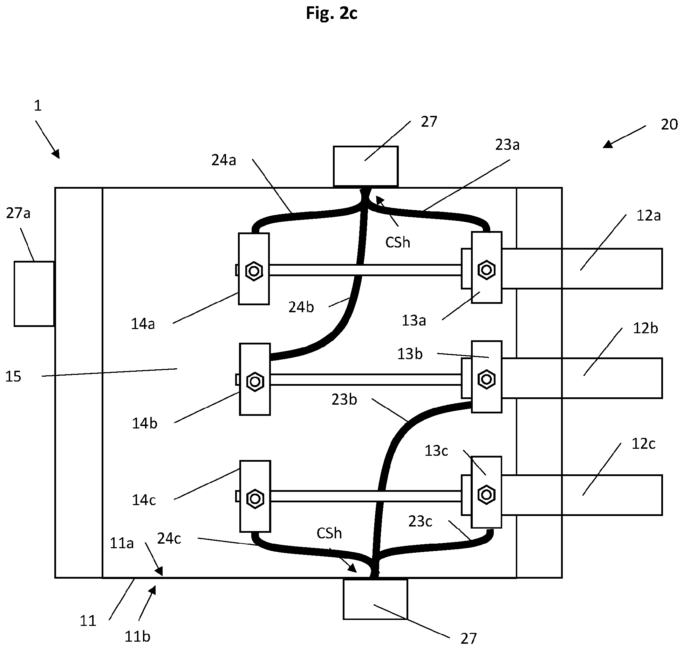

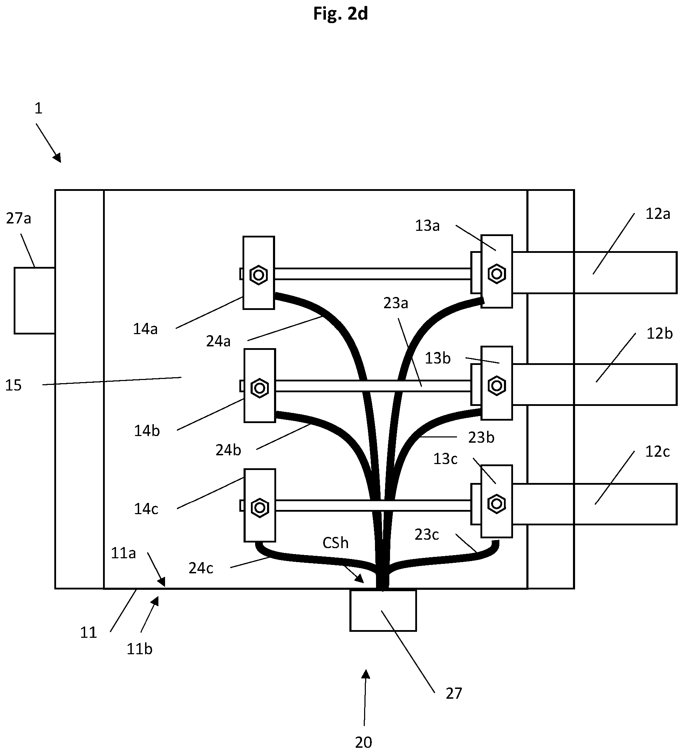

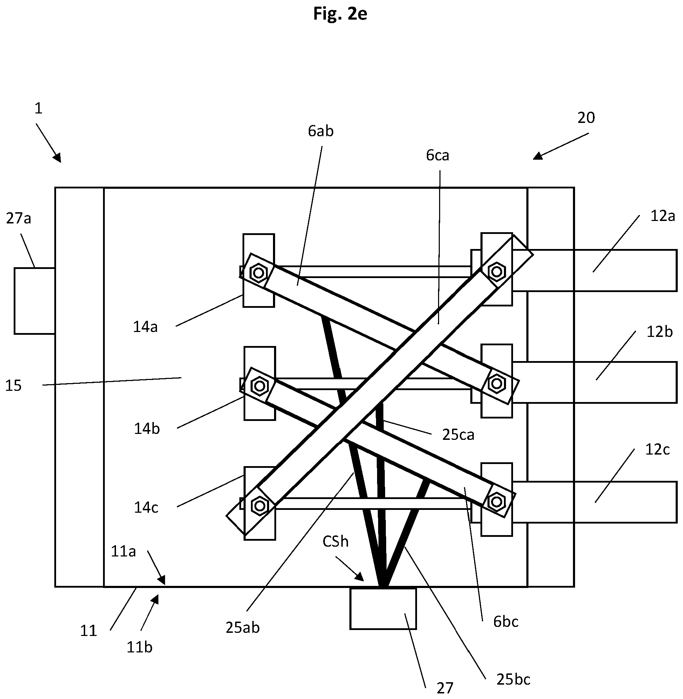

It is now referred to fig. 2 and fig. 4. Several parts of the prior art cross bonding box 1 are also shown here, such as the earthing bar bridges 6ab, 6bc, 6ca, outer conductor clamps 13a, 13b, 13c and the inner conductor clamps 14a, 14b, 14c mounted to the base plate 15, and the bottom plate 11bp and four side plates 11sp of the housing 11. It should be noted that some parts of the cross-bonding box have been removed from fig. 2a and fig. 4, such as the sheath voltage limiter 3. The outer conductor clamps 13 are closer to the openings 4a, 4b and 4c than the inner conductor clamps 14.

### A monitoring system for monitoring of a cross-bonding box

One embodiment of the monitoring system 20 mounted to the cross-bonding box 1 will now be described with reference to fig 2a.

Here it is shown that the monitoring system 20 comprises several heat transfer means 23a, 23b, 23c, 24a, 24b, 24c. The heat transfer means 23a, 23b, 23c, 24a, 24b, 24c is thermally connectable with a first end of the heat transfer means 23a, 23b, 23c, 24a, 24b, 24c to the conductor clamps 13a, 13b, 13c, 14a, 14b, 14c and with a second end of the heat transfer means 23a, 23b, 23c, 24a, 24b, 24c connectable to a housing contact area CSh of the inner surface 11a of the waterproof housing 11. Preferably, the housing contact area CSh is located on the side plate 11sp.

In a further embodiment, the monitoring system 20 comprises several heat transfer means 25ab, 25bc, 25ca. The heat transfer means 25ab, 25bc, 25ca is thermally connectable with a first end of the heat transfer means 25ab, 25bc, 25ca to the earthing bar bridges 6ab, 6bc, 6ca and with a second end of the heat transfer means 25ab, 25bc, 25ca connectable to a housing contact area CSh of the inner surface 11a of the waterproof housing 11. Preferably, the housing contact area CSh is located on the side plate 11sp.

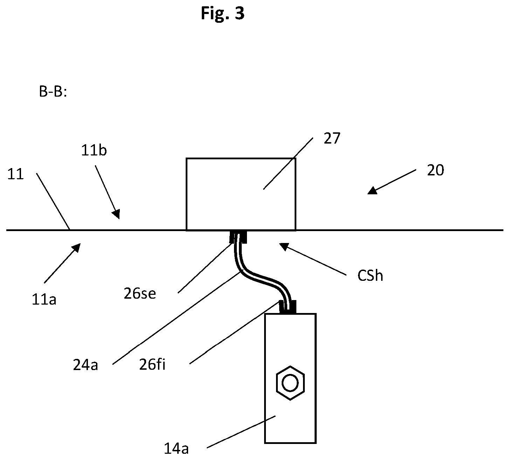

It is now referred to fig. 3. Here it is shown that the heat transfer means 24a is provided with an electrical insulator 26fi between the first end of the heat transfer means and the conductor clamp 14a. The heat transfer means 24a is further provided with an electrical insulator 26se between the second end of the heat transfer means and the inner surface of the waterproof housing 11a. It is considered sufficient to use only one of the insulators 26fi, 26se to provide electrical insulation. However, it is also possible to use both insulators 26fi, 26se.

It should be noted that even though not shown in fig. 2a, all heat transfer means in fig. 2a are provided with one or two such electric insulators 26fi, 26se.

The electrical insulator 26fi and 26se may be a dielectric material such as polyethylene (PE) or cross-linked polyethylene (XLPE). The electrical insulator is shaped as a thin layer with a thickness of a few micrometers. It is typically a cap insulator. This provides sufficient electrical insulation and at the same time allows thermal conduction.

The monitoring system 20 further comprises thermal sensing units 27 mounted on the outer surface 11b of the waterproof housing 11 adjacent to the housing contact area CSh of the inner surface 11a, as shown in fig 2a. In the present embodiment, there is one thermal sensing unit 27 for conductor clamp.

An additional thermal sensing unit 27a may be mounted on the outer surface 11b of the waterproof housing 1. The additional thermal sensing unit will be positioned at a distance from the housing contact area CSh. The purpose of the additional thermal sensing unit 27a is to provide a reference temperature representing ambient temperature.

Typically, the waterproof housing 11 is made of a heat conducting material such as a metal. Furthermore, the heat transfer means are typically metal bars, heat pipes or metal wires.

It is now referred to fig. 2b, in which a second embodiment of the monitoring system 20 is shown. The second embodiment corresponds to the first embodiment described above, and only differences between the first and second embodiment will be described herein.

In fig. 2b, the monitoring system 20 comprises one heat transfer means for each conductor clamp. The first end of the respective heat transfer means is connectable to the individual conductor clamps. However, two heat transfer means have their second ends connectable to the same housing contact area CSh of the inner surface 11a of the waterproof housing 11. Hence, the temperature of the two conductor clamps 13a, 14a are monitored by a first common sensing unit 27, the temperature of the two conductor clamps 13b, 14b are monitored by a second common sensing unit 27 and the temperature of the two conductor clamps 13c, 14c are monitored by a third common sensing unit 27.

It is now referred to fig. 2c, in which a third embodiment of the monitoring system 20 is shown. The third embodiment corresponds to the first embodiment described above, and only differences between the first and third embodiment will be described herein.

In fig. 2c, the monitoring system 20 comprises one heat transfer means for each conductor clamp. The first end of the respective heat transfer means is connectable to the individual conductor clamps. However, three heat transfer means have their second ends connectable to the same housing contact area CSh of the inner surface 11a of the waterproof housing 11. Hence, the temperature of the three conductor clamps 13a, 14a and 14b are monitored by a first common sensing unit 27 and the temperature of the three conductor clamps 13b, 13c and 14c are monitored by a second common sensing unit 27.

It is now referred to fig. 2d, in which a fourth embodiment of the monitoring system 20 is shown. The fourth embodiment corresponds to the first embodiment described above, and only differences between the first and fourth embodiment will be described herein.

In fig. 2d, the monitoring system 20 comprises one heat transfer means for each conductor clamp. The first end of the respective heat transfer means is connectable to the individual conductor clamps. However, all heat transfer means have their second ends connectable to the same housing contact area CSh of the inner surface 11a of the waterproof housing 11. Hence, the temperature of the conductor clamps 13a, 13b, 13c, 14a, 14b and 14c are monitored by one common sensing unit 27.

It is now referred to fig. 2e, in which a fifth embodiment of the monitoring system 20 is shown. The fifth embodiment corresponds to the first embodiment described above, and only differences between the first and fifth embodiment will be described herein.

In fig. 2e, the monitoring system 20 comprises one heat transfer means for each earthing bar bridge. The first end of the respective heat transfer means is connectable to the individual earthing bar bridges. All heat transfer means 25ab, 25bc, 25ca have their second ends connectable to the same housing contact area CSh of the inner surface 11a of the waterproof housing 11. Hence, the temperature of the earthing bar bridges 6ab, 6bc, 6ca are monitored by one common sensing unit 27.

In a further embodiment of the monitoring system 20, the monitoring system 20 comprises one heat transfer means for each earthing bar bridge. The first end of the respective heat transfer means is connectable to the individual earthing bar bridges. The second end of the respective heat transfer means 25ab, 25bc, 25ca is connectable to individual housing contact areas CSh of the inner surface 11a of the waterproof housing 11. Hence, the temperature of each of the earthing bar bridges 6ab, 6bc, 6ca is monitored by an individual sensing unit 27.

In should further be noted that in an alternative embodiment, the housing contact area CSh for at least one of the sensing units 27 may be provided on the inner surface of the lid section 16 of the waterproof housing 11.

### Measuring critical temperature

The thermal sensing units 27 shown in fig. 2a to 2e are configured to measure a parameter representative of the temperature of the conductor clamps 13a, 13b, 13c, 14a, 14b, 14c or earthing bar bridges 6ab, 6bc, 6ca. Heat at the surface of a conductor clamp 13a, 13b, 13c, 14a, 14b, 14c or a earthing bar bridge 6ab, 6bc, 6ca is transmitted via the insulator 26fi to the first end of a heat transfer means 23a, 23b, 23c, 24a, 24b, 24c or 25ab, 25bc, 25ca and further through the heat transfer means 23a, 23b, 23c, 24a, 24b, 24c or 25ab, 25bc, 25ca to the second end of the heat transfer means 23a, 23b, 23c, 24a, 24b, 24c or 25ab, 25bc, 25ca and insulator 26se and further to the housing contact area CSh of the inner surface 11a of the waterproof housing 11. The heat is then conducted through the housing 11 and to the outer surface 11b and into the thermal sensing unit 27.

The individual housing contact areas CSh are spaced apart with a distance Dmin, wherein Dmin is the distance where temperature measurement of a thermal sensing unit 27 at one housing contact area CSh is not substantially affected by the temperature, or changes in temperature at an adjacent housing contact area CSh. The distance Dmin is determined based on previous experience or based on numerical simulations of heat distribution and or heat flow in the cross-bonding box.

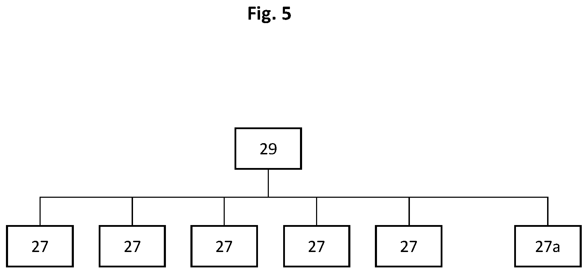

The thermal sensing unit 27 and additional thermal sensing unit 27a are in communication with a signal processing unit 29 as shown in fig. 5. The signal processing unit 29 is configured to monitor the temperature difference between the temperature measured by a thermal sensing unit 27 adjacent to a housing contact area CSh, with the temperature measured by the additional sensing unit 27a. The additional thermal sensing unit 27a provides a reference temperature representing undisturbed ambient temperature. The signal processing unit 29 triggers an alarm if a critical temperature difference is exceeded. The critical temperature is predetermined and will be tuned or adjusted after the monitoring system 20 has been installed.

Alternatively, the signal processing unit 29 may be configured to measure relative temperatures differences between the thermal sensing units 27.

When the signal processing unit 29 triggers an alarm that a critical temperature difference has been exceeded, current transmission in cables 12 is reduced or stopped to limit excessive heat generation and irreparable damage to the components of the cross-link box 1. Then the bolts for the conductor clamps 13a, 13b, 13c, 14a, 14b, 14c are re-tightened to minimize contact resistance and heat generation at the conductor clamps.

### Installation of the monitoring system

The monitoring system 20 may be installed in a new cross-bonding box 1 or retrofitted in a cross-bonding box 1 that was installed previously. Installing of the monitoring system 20 involves deciding on the basic layout, some of the possible embodiments are shown in fig 2a to fig 2b. There is an advantage of choosing a configuration where the heat transfer means are connected to the base of the housing 11 and not the lid 16 (see fig 4) as the system can be installed and tested prior to locking the lid 16 of the cross-bonding box 1.

A first end of the heat transfer means 23a, 23b, 23c, 24a, 24b, 24c or 25ab, 25bc, 25ca is thermally connectable to one of the outer or inner conductor clamps 13a, 13b, 13c, 14a, 14b, 14c and one or several heat transfer means 23a, 23b, 23c, 24a, 24b, 24c or 25ab, 25bc, 25ca are thermally connectable to a housing contact area CSh.

When installing the heat transfer means 23a, 23b, 23c, 24a, 24b, 24c or 25ab, 25bc, 25ca, electrical insulator 26fi and or 26se is inserted at the first end and/ or the second end of the heat transfer means 23a, 23b, 23c, 24a, 24b, 24c or 25ab, 25bc, 25ca.

Connecting heat transfer means 23a, 23b, 23c, 24a, 24b, 24c or 25ab, 25bc, 25ca to a surface must ensure both good thermal conduction and electrical insulation. This requires a method that does not harm the electrical insulator 26fi and 26se. It is therefore preferred to use mechanical means such as clamps or bolts or pins for connecting the heat transfer means 23a, 23b, 23c, 24a, 24b, 24c or 25ab, 25bc, 25ca to the inner surface 11a of the waterproof housing 11 or a surface of the connector clamps 13, 14 or earthing bar bridges 6. In some cases this may entail preinstalling suitable profiles on the inner surface 11a or shaping first ends or the second ends of the heat transfer means 23a, 23b, 23c, 24a, 24b, 24c or 25ab, 25bc, 25ca to receive clamps or bolts or pins.

On the outside the housing 11 of the cross-bonding box 1, thermal sensing units 27 are installed. They are positioned adjacent to the housing contact area or areas CSh. The additional thermal sensing unit 27a is placed away from the housing contact area. The thermal sensing unit 27 and the additional thermal sensing unit 27a are spaced at least Dmin apart. Dmin is the distance where temperature measurement of a thermal sensing unit 27 at one housing contact area CSh is not disturbed by the temperature, or changes in temperature at an adjacent housing contact area CSh. Dmin is determined prior to installation either by referring to experience from other installations or by using numerical heat simulation methods.

The thermal sensing units 27 and the additional thermal sensing unit 27a are connected by wire or wirelessly to the signal processing unit 29 to monitor the temperature within the cross-bonding box 1.

### LIST OF REFERENCE NUMBERS

1 - cross-bonding box with integrity monitoring
3 - sheath voltage limiter
4 - opening for high voltage cable 12
6 - earthing bar bridge
11 - housing of cross-bonding box
11a - inner surface of the waterproof housing 11
11b - outer surface of the waterproof housing 11
12 - high voltage cable
13 - outer conductor clamp
14 - inner conductor clamp
15 - base plate
16 - removeable lid
20 - a monitoring system for installation in a cross-bonding box 1
23 - heat transfer means connected to outer conductor clamp 13
24 - heat transfer means connected to inner conductor clamp 14
25 - heat transfer means connected to earthing bar bridge 6
26fi - electrical insulator at the first end of the heat transfer means,
26se - electrical insulator at the second end of the heat transfer mean,
27 - thermal sensing unit
27a - additional thermal sensing unit
29 - signal processing unit
CSh - housing contact area for thermal conduction means 21, 24
Dmin - minimum distance between housing contact area CSh
Tcrit - critical temperature

## Claims

1. A cross-bonding box (1) for cross-bonding sheaths of a three-phase power cable, the cross-bonding box (1) comprising:
- a waterproof housing (11) comprising an inner surface (11a) and an outer surface (11b);
- a removeable lid (16) adapted to close the waterproof housing (11);
- an outer conductor clamp (13a, 13b, 13c) connectable to a high voltage cable (12a, 12b, 12c);
- an inner conductor clamp (14a, 14b, 14c) connectable to a high voltage cable (12a, 12b, 12c);
- earthing bar bridges (6ab, 6bc, 6ca) attached to the conductor clamps (13a, 13b, 13c, 14a, 14b, 14c);
wherein the conductor clamps (13a, 13b, 13c, 14a, 14b, 14c) and earthing bar bridges (6ab, 6bc, 6ca) are electrically insulated from the waterproof housing (11);
wherein the cross-bonding box (1) comprises a monitoring system (20), wherein the monitoring system (20) comprises:
- a heat transfer means (23a, 23b, 23c, 24a, 24b, 24c, 25ab, 25bc, 25ca) having a first end and a second end;
- a thermal sensing unit (27);
**characterised in that**
the first end of the heat transfer means (23a, 23b, 23c, 24a, 24b, 24c, 25ab, 25bc, 25ca) is thermally connected to a conductor clamp (13a, 13b, 13c, 14a, 14b, 14c) or an earthing bar bridge (6ab, 6bc, 6ca) located within the waterproof housing (11) of the cross-bonding box (1);
wherein the second end of the heat transfer means (23a, 23b, 23c, 24a, 24b, 24c, 25ab, 25bc, 25ca) is thermally connected to a housing contact area (CSh) of the inner surface (11a) of the waterproof housing (11);
wherein the thermal sensing unit (27) is arranged on the outer surface (11b) of the waterproof housing (11) adjacent to the housing contact area (CSh) of the inner surface (11a).

2. The cross-bonding box (1) according to claim 1, wherein the monitoring system (20) comprises:
- one heat transfer means (23a, 23b, 23c, 24a, 24b, 24c) for each conductor clamp (13a, 13b, 13c, 14a, 14b, 14c) located within the waterproof housing (11);
wherein the first end of the respective heat transfer means (23a, 23b, 23c, 24a, 24b, 24c) is thermally connected to the respective conductor clamps (13a, 13b, 13c, 14a, 14b, 14c);
wherein the second end of the respective heat transfer means (23a, 23b, 23c, 24a, 24b, 24c) is thermally connected to individual housing contact areas (CSh) of the inner surface (11a) of the waterproof housing (11);
wherein the individual housing contact areas (CSh) are spaced apart from each other.

3. The cross-bonding box (1) according to claim 1, wherein the monitoring system (20) comprises:
- one heat transfer means (23a, 23b, 23c, 24a, 24b, 24c) for each conductor clamp (13a, 13b, 13c, 14a, 14b, 14c) located within the waterproof housing (11);
wherein the first end of the respective heat transfer means (23a, 23b, 23c, 24a, 24b, 24c) is thermally connected to the respective conductor clamps (13a, 13b, 13c, 14a, 14b, 14c);
wherein the second ends of two or more heat transfer means (23a, 23b, 23c, 24a, 24b, 24c) are thermally connected to a common housing contact area (CSh) of the inner surface (11a) of the waterproof housing (11);
wherein the common housing contact areas (CSh) are spaced apart from each other.

4. The cross-bonding box (1) according to claim 1, wherein the monitoring system (20) comprises:
- one heat transfer means (25ab, 25bc, 25ca) for each earthing bar bridge (6ab, 6bc, 6ca) located within the waterproof housing (11);
wherein the first end of the respective heat transfer means (25ab, 25bc, 25ca) is thermally connected to the respective earthing bar bridges (6ab, 6bc, 6ca);
wherein the second end of the respective heat transfer means (25ab, 25bc, 25ca) is thermally connected to individual housing contact areas (CSh) of the inner surface (11a) of the waterproof housing (11);
wherein the individual housing contact areas (CSh) are spaced apart from each other.

5. The cross-bonding box (1) according to claim 1, wherein the monitoring system (20) comprises:
- one heat transfer means (25ab, 25bc, 25ca) for each earthing bar bridge (6ab, 6bc, 6ca) located within the waterproof housing (11);
wherein the first end of the respective heat transfer means (25ab, 25bc, 25ca) is thermally connected to the respective earthing bar bridges (6ab, 6bc, 6ca);
wherein the second ends of two or more heat transfer means (25ab, 25bc, 25ca) are thermally connected to a common housing contact area (CSh) of the inner surface (11a) of the waterproof housing (11);
wherein the common housing contact areas (CSh) are spaced apart from each other.

6. The cross-bonding box (1) according to any one of the above claims, wherein the heat transfer means (23a, 23b, 23c, 24a, 24b, 24c, 25ab, 25bc, 25ca) is a metal bar or a heat pipe.

7. The cross-bonding box (1) according to any one of the above claims, wherein the monitoring system (20) comprises an electrical insulator (26fi, 26se) connected between:
- the first end of the heat transfer means (23a, 23b, 23c, 24a, 24b, 24c) and the conductor clamp (13a, 13b, 13c, 14a, 14b, 14c);
- the first end of the heat transfer means (25ab, 25bc, 25ca) and the earthing bar bridge (6ab, 6bc, 6ca); and/or
- the second end of the heat transfer means (23a, 23b, 23c, 24a, 24b, 24c, 25ab, 25bc, 25ca) and the housing (11).

8. The cross-bonding box (1) according to claim 7, wherein the electrical insulator (26fi, 26se) of the heat transfer means (23a, 23b, 23c, 24a, 24b, 24c, 25ab, 25bc, 25ca) is a dielectric material.

9. The cross-bonding box (1) according to claim 1, wherein the thermal sensing unit (27) is configured to measure a parameter representative of the temperature of the conductor clamp (13a, 13b, 13c, 14a, 14b, 14c) or the earthing bar bridge (6ab, 6bc, 6ca) located within the waterproof housing (11).

10. The cross-bonding box (1) according to claim 1, wherein the monitoring system (20) comprises an additional thermal sensing unit (27a) arranged on the outer surface (11b) of the waterproof housing (11) at a distance from the housing contact area (CSh) of the inner surface (11a), wherein the additional thermal sensing unit (27a) is configured to measure an ambient temperature of the housing.

11. Method of retrofitting a monitoring system (20) to a cross-bonding box (1) comprising the following steps:
- providing a heat transfer means (23a, 23b, 23c, 24a, 24b, 24c, 25ab, 25bc, 25ca) having a first end and a second end;
- thermally connecting the first end of the heat transfer means (23a, 23b, 23c, 24a, 24b, 24c, 25ab, 25bc, 25ca) to a conductor clamp (13a, 13b, 13c, 14a, 14b, 14c) or an earthing bar bridge (6ab, 6bc, 6ca);
- thermally connecting the second end of the heat transfer means (23a, 23b, 23c, 24a, 24b, 24c, 25ab, 25bc, 25ca) to a housing contact area (CSh) of an inner surface (11a) of the waterproof housing (11);
- insulating electrically the conductor clamp (13a, 13b, 13c, 14a, 14b, 14c) or the earthing bar bridge (6ab, 6bc, 6ca) from the housing (11);
- arranging a thermal sensing unit (27) on an outer surface (11b) of the waterproof housing (11) adjacent to the housing contact area (CSh) of the inner surface (11a).

## Patentansprüche

1. Cross-Bonding-Box (1) zum Cross-Bonding von Hüllen eines dreiphasigen Stromkabels, wobei die Cross-Bonding-Box (1) Folgendes umfasst:
- ein wasserdichtes Gehäuse (11), das eine Innenfläche (11a) und eine Außenfläche (11b) umfasst;
- einen abnehmbaren Deckel (16), der dazu angepasst ist, das wasserdichte Gehäuse (11) zu schließen;
- eine Außenleiterklemme (13a, 13b, 13c), die mit einem Hochspannungskabel (12a, 12b, 12c) verbindbar ist;
- eine Innenleiterklemme (14a, 14b, 14c), die mit einem Hochspannungskabel (12a, 12b, 12c) verbindbar ist;
- Erdungsschienenbrücken (6ab, 6bc, 6ca), die an den Leiterklemmen (13a, 13b, 13c, 14a, 14b, 14c) befestigt sind;
wobei die Leiterklemmen (13a, 13b, 13c, 14a, 14b, 14c) und Erdungsschienenbrücken (6ab, 6bc, 6ca) von dem wasserdichten Gehäuse (11) elektrisch isoliert sind;
wobei die Cross-Bonding-Box (1) ein Überwachungssystem (20) umfasst, wobei das Überwachungssystem (20) Folgendes umfasst:
- ein Wärmeübertragungsmittel (23a, 23b, 23c, 24a, 24b, 24c, 25ab, 25bc, 25ca), das ein erstes Ende und ein zweites Ende aufweist;
- eine Wärmeerfassungseinheit (27);
**dadurch gekennzeichnet, dass** das erste Ende des Wärmeübertragungsmittels (23a, 23b, 23c, 24a, 24b, 24c, 25ab, 25bc, 25ca) thermisch mit einer Leiterklemme (13a, 13b, 13c, 14a, 14b, 14c) oder einer Erdungsschienenbrücke (6ab, 6bc, 6ca) verbunden ist, die sich innerhalb des wasserdichten Gehäuses (11) der Cross-Bonding-Box (1) befindet;
wobei das zweite Ende des Wärmeübertragungsmittels (23a, 23b, 23c, 24a, 24b, 24c, 25ab, 25bc, 25ca) thermisch mit einem Gehäusekontaktbereich (CSh) der Innenfläche (11a) des wasserdichten Gehäuses (11) verbunden ist;
wobei die Wärmeerfassungseinheit (27) an der Außenfläche (11b) des wasserdichten Gehäuses (11) benachbart zu dem Gehäusekontaktbereich (CSh) der Innenfläche (11a) angeordnet ist.

2. Cross-Bonding-Box (1) nach Anspruch 1, wobei das Überwachungssystem (20) Folgendes umfasst:
- ein Wärmeübertragungsmittel (23a, 23b, 23c, 24a, 24b, 24c) für jede Leiterklemme (13a, 13b, 13c, 14a, 14b, 14c), die sich innerhalb des wasserdichten Gehäuses (11) befindet;
wobei das erste Ende des jeweiligen Wärmeübertragungsmittels (23a, 23b, 23c, 24a, 24b, 24c) thermisch mit den jeweiligen Leiterklemmen (13a, 13b, 13c, 14a, 14b, 14c) verbunden ist;
wobei das zweite Ende des jeweiligen Wärmeübertragungsmittels (23a, 23b, 23c, 24a, 24b, 24c) thermisch mit einzelnen Gehäusekontaktbereichen (CSh) der Innenfläche (11a) des wasserdichten Gehäuses (11) verbunden ist;
wobei die einzelnen Gehäusekontaktbereiche (CSh) voneinander beabstandet sind.

3. Cross-Bonding-Box (1) nach Anspruch 1, wobei das Überwachungssystem (20) Folgendes umfasst:
- ein Wärmeübertragungsmittel (23a, 23b, 23c, 24a, 24b, 24c) für jede Leiterklemme (13a, 13b, 13c, 14a, 14b, 14c), die sich innerhalb des wasserdichten Gehäuses (11) befindet;
wobei das erste Ende des jeweiligen Wärmeübertragungsmittels (23a, 23b, 23c, 24a, 24b, 24c) thermisch mit den jeweiligen Leiterklemmen (13a, 13b, 13c, 14a, 14b, 14c) verbunden ist;
wobei die zweiten Enden von zwei oder mehr Wärmeübertragungsmitteln (23a, 23b, 23c, 24a, 24b, 24c) thermisch mit einem gemeinsamen Gehäusekontaktbereich (CSh) der Innenfläche (11a) des wasserdichten Gehäuses (11) verbunden sind;
wobei die gemeinsamen Gehäusekontaktbereiche (CSh) voneinander beabstandet sind.

4. Cross-Bonding-Box (1) nach Anspruch 1, wobei das Überwachungssystem (20) Folgendes umfasst:
- ein Wärmeübertragungsmittel (25ab, 25bc, 25ca) für jede Erdungsschienenbrücke (6ab, 6bc, 6ca), die sich innerhalb des wasserdichten Gehäuses (11) befindet;
wobei das erste Ende des jeweiligen Wärmeübertragungsmittels (25ab, 25bc, 25ca) thermisch mit den jeweiligen Erdungsschienenbrücken (6ab, 6bc, 6ca) verbunden ist;
wobei das zweite Ende des jeweiligen Wärmeübertragungsmittels (25ab, 25bc, 25ca) thermisch mit einzelnen Gehäusekontaktbereichen (CSh) der Innenfläche (11a) des wasserdichten Gehäuses (11) verbunden ist;
wobei die einzelnen Gehäusekontaktbereiche (CSh) voneinander beabstandet sind.

5. Cross-Bonding-Box (1) nach Anspruch 1, wobei das Überwachungssystem (20) Folgendes umfasst:
- ein Wärmeübertragungsmittel (25ab, 25bc, 25ca) für jede Erdungsschienenbrücke (6ab, 6bc, 6ca), die sich innerhalb des wasserdichten Gehäuses (11) befindet;
wobei das erste Ende des jeweiligen Wärmeübertragungsmittels (25ab, 25bc, 25ca) thermisch mit den jeweiligen Erdungsschienenbrücken (6ab, 6bc, 6ca) verbunden ist;
wobei die zweiten Enden von zwei oder mehr Wärmeübertragungsmitteln (25ab, 25bc, 25ca) thermisch mit einem gemeinsamen Gehäusekontaktbereich (CSh) der Innenfläche (11a) des wasserdichten Gehäuses (11) verbunden sind;
wobei die gemeinsamen Gehäusekontaktbereiche (CSh) voneinander beabstandet sind.

6. Cross-Bonding-Box (1) nach einem der vorstehenden Ansprüche, wobei das Wärmeübertragungsmittel (23a, 23b, 23c, 24a, 24b, 24c, 25ab, 25bc, 25ca) ein Metallstab oder ein Wärmerohr ist.

7. Cross-Bonding-Box (1) nach einem der vorstehenden Ansprüche, wobei das Überwachungssystem (20) einen elektrischen Isolator (26fi, 26se) umfasst, der zwischen Folgendem verbunden ist:
- dem ersten Ende des Wärmeübertragungsmittels (23a, 23b, 23c, 24a, 24b, 24c) und der Leiterklemme (13a, 13b, 13c, 14a, 14b, 14c);
- dem ersten Ende des Wärmeübertragungsmittels (25ab, 25bc, 25ca) und der Erdungsschienenbrücke (6ab, 6bc, 6ca); und/oder
- dem zweiten Ende des Wärmeübertragungsmittels (23a, 23b, 23c, 24a, 24b, 24c, 25ab, 25bc, 25ca) und dem Gehäuse (11).

8. Cross-Bonding-Box (1) nach Anspruch 7, wobei der elektrische Isolator (26fi, 26se) des Wärmeübertragungsmittels (23a, 23b, 23c, 24a, 24b, 24c, 25ab, 25bc, 25ca) ein dielektrisches Material ist.

9. Cross-Bonding-Box (1) nach Anspruch 1, wobei die Wärmeerfassungseinheit (27) dazu konfiguriert ist, einen Parameter zu messen, der für die Temperatur der Leiterklemme (13a, 13b, 13c, 14a, 14b, 14c) oder der Erdungsschienenbrücke (6ab, 6bc, 6ca) repräsentativ ist, die sich innerhalb des wasserdichten Gehäuses (11) befindet.

10. Cross-Bonding-Box (1) nach Anspruch 1, wobei das Überwachungssystem (20) eine zusätzliche Wärmeerfassungseinheit (27a) umfasst, die an der Außenfläche (11b) des wasserdichten Gehäuses (11) in einem Abstand von dem Gehäusekontaktbereich (CSh) der Innenfläche (11a) angeordnet ist, wobei die zusätzliche Wärmeerfassungseinheit (27a) dazu konfiguriert ist, eine Umgebungstemperatur des Gehäuses zu messen.

11. Verfahren zum Nachrüsten eines Überwachungssystems (20) an einer Cross-Bonding-Box (1), umfassend die folgenden Schritte:
- Bereitstellen eines Wärmeübertragungsmittels (23a, 23b, 23c, 24a, 24b, 24c, 25ab, 25bc, 25ca), das ein erstes Ende und ein zweites Ende aufweist;
- thermisches Verbinden des ersten Endes des Wärmeübertragungsmittels (23a, 23b, 23c, 24a, 24b, 24c, 25ab, 25bc, 25ca) mit einer Leiterklemme (13a, 13b, 13c, 14a, 14b, 14c) oder einer Erdungsschienenbrücke (6ab, 6bc, 6ca);
- thermisches Verbinden des zweiten Endes des Wärmeübertragungsmittels (23a, 23b, 23c, 24a, 24b, 24c, 25ab, 25bc, 25ca) mit einem Gehäusekontaktbereich (CSh) einer Innenfläche (11a) des wasserdichten Gehäuses (11);
- elektrisches Isolieren der Leiterklemme (13a, 13b, 13c, 14a, 14b, 14c) oder der Erdungsschienenbrücke (6ab, 6bc, 6ca) von dem Gehäuse (11);
- Anordnen einer Wärmeerfassungseinheit (27) an einer Außenfläche (11b) des wasserdichten Gehäuses (11) benachbart zu dem Gehäusekontaktbereich (CSh) der Innenfläche (11a).

## Revendications

1. Boîtier de liaison croisée (1) pour la liaison croisée de gaines d'un câble d'alimentation triphasé, le boîtier de liaison croisée (1) comprenant :
- un logement étanche à l'eau (11) comprenant une surface interne (11a) et une surface externe (11b) ;
- un couvercle amovible (16) adapté pour fermer le logement étanche à l'eau (11) ;
- une pince conductrice externe (13a, 13b, 13c) pouvant être connectée à un câble haute tension (12a, 12b, 12c) ;
- une pince conductrice interne (14a, 14b, 14c) pouvant être connectée à un câble haute tension (12a, 12b, 12c) ;
- des ponts de barres de mise à la terre (6ab, 6bc, 6ca) fixés aux pinces conductrices (13a, 13b, 13c, 14a, 14b, 14c) ;
dans lequel les pinces conductrices (13a, 13b, 13c, 14a, 14b, 14c) et les ponts de barre de mise à la terre (6ab, 6bc, 6ca) sont électriquement isolés du logement étanche à l'eau (11) ;
dans lequel le boîtier de liaison croisée (1) comprend un système de surveillance (20),
dans lequel système de surveillance (20) comprend :
- un moyen de transfert de chaleur (23a, 23b, 23c, 24a, 24b, 24c, 25ab, 25bc, 25ca) présentant une première extrémité et une seconde extrémité ;
- une unité de détection thermique (27) ;
**caractérisé en ce que**
la première extrémité du moyen de transfert de chaleur (23a, 23b, 23c, 24a, 24b, 24c, 25ab, 25bc, 25ca) est thermiquement connectée à une pince conductrice (13a, 13b, 13c, 14a, 14b, 14c) ou à un pont de barre de mise à la terre (6ab, 6bc, 6ca) situé à l'intérieur du logement étanche à l'eau (11) du boîtier de liaison croisée (1) ;
dans lequel la seconde extrémité du moyen de transfert de chaleur (23a, 23b, 23c, 24a, 24b, 24c, 25ab, 25bc, 25ca) est thermiquement connectée à une zone de contact de logement (CSh) de la surface interne (11a) du logement étanche à l'eau (11) ;
dans lequel l'unité de détection thermique (27) est agencée sur la surface externe (11b) du logement étanche à l'eau (11) adjacente à la zone de contact de logement (CSh) de la surface interne (11a).

2. Boîtier de liaison croisée (1) selon la revendication 1, dans lequel le système de surveillance (20) comprend :
- un moyen de transfert de chaleur (23a, 23b, 23c, 24a, 24b, 24c) pour chaque pince conductrice (13a, 13b, 13c, 14a, 14b, 14c) situé à l'intérieur du logement étanche à l'eau (11) ;
dans lequel la première extrémité du moyen de transfert de chaleur (23a, 23b, 23c, 24a, 24b, 24c) respectif est thermiquement connectée aux pinces conductrices (13a, 13b, 13c, 14a, 14b, 14c) respectives ;
dans lequel la seconde extrémité du moyen de transfert de chaleur (23a, 23b, 23c, 24a, 24b, 24c) respectif est thermiquement connectée à des zones de contact de logement (CSh) individuelles de la surface interne (11a) du logement étanche à l'eau (11) ;
dans lequel les zones de contact de logement (CSh) individuelles sont espacées les unes des autres.

3. Boîtier de liaison croisée (1) selon la revendication 1, dans lequel le système de surveillance (20) comprend :
- un moyen de transfert de chaleur (23a, 23b, 23c, 24a, 24b, 24c) pour chaque pince conductrice (13a, 13b, 13c, 14a, 14b, 14c) situé à l'intérieur du logement étanche à l'eau (11) ;
dans lequel la première extrémité du moyen de transfert de chaleur (23a, 23b, 23c, 24a, 24b, 24c) respectif est thermiquement connectée aux pinces conductrices (13a, 13b, 13c, 14a, 14b, 14c) respectives ;
dans lequel les secondes extrémités de deux moyens de transfert de chaleur (23a, 23b, 23c, 24a, 24b, 24c) ou plus sont thermiquement connectées à une zone de contact de logement (CSh) commune de la surface interne (11a) du logement étanche à l'eau (11) ;
dans lequel les zones de contact de logement (CSh) communes sont espacées les unes des autres.

4. Boîtier de liaison croisée (1) selon la revendication 1, dans lequel le système de surveillance (20) comprend :
- un moyen de transfert de chaleur (25ab, 25bc, 25ca) pour chaque pont de barre de mise à la terre (6ab, 6bc, 6ca) situé à l'intérieur du logement étanche à l'eau (11) ;
dans lequel la première extrémité du moyen de transfert de chaleur respectif (25ab, 25bc, 25ca) est thermiquement connectée aux ponts de barre de mise à la terre respectifs (6ab, 6bc, 6ca) ;
dans lequel la seconde extrémité du moyen de transfert de chaleur respectif (25ab, 25bc, 25ca) est thermiquement connectée à des zones de contact de logement (CSh) individuelles de la surface interne (11a) du logement étanche à l'eau (11) ;
dans lequel les zones de contact de logement (CSh) individuelles sont espacées les unes des autres.

5. Boîtier de liaison croisée (1) selon la revendication 1, dans lequel le système de surveillance (20) comprend :
- un moyen de transfert de chaleur (25ab, 25bc, 25ca) pour chaque pont de barre de mise à la terre (6ab, 6bc, 6ca) situé à l'intérieur du logement étanche à l'eau (11) ;
dans lequel la première extrémité du moyen de transfert de chaleur respectif (25ab, 25bc, 25ca) est thermiquement connectée aux ponts de barre de mise à la terre respectifs (6ab, 6bc, 6ca) ;
dans lequel les secondes extrémités de deux moyens de transfert de chaleur (25ab, 25bc, 25ca) ou plus sont thermiquement connectées à une zone de contact de logement (CSh) commune de la surface interne (11a) du logement étanche à l'eau (11) ;
dans lequel les zones de contact de logement (CSh) communes sont espacées les unes des autres.

6. Boîtier de liaison croisée (1) selon l'une quelconque des revendications précédentes, dans lequel le moyen de transfert de chaleur (23a, 23b, 23c, 24a, 24b, 24c, 25ab, 25bc, 25ca) est une barre métallique ou un caloduc.

7. Boîtier de liaison croisée (1) selon l'une quelconque des revendications précédentes, dans lequel le système de surveillance (20) comprend un isolant électrique (26ft, 26se) connecté entre :
- la première extrémité du moyen de transfert de chaleur (23a, 23b, 23c, 24a, 24b, 24c) et la pince conductrice (13a, 13b, 13c, 14a, 14b, 14c) ;
- la première extrémité du moyen de transfert de chaleur (25ab, 25bc, 25ca) et le pont de barre de mise à la terre (6ab, 6bc, 6ca) ; et/ou
- la seconde extrémité du moyen de transfert de chaleur (23a, 23b, 23c, 24a, 24b, 24c, 25ab, 25bc, 25ca) et le logement (11).

8. Boîtier de liaison croisée (1) selon la revendication 7, dans lequel l'isolant électrique (26fi, 26se) du moyen de transfert de chaleur (23a, 23b, 23c, 24a, 24b, 24c, 25ab, 25bc, 25ca) est un matériau diélectrique.

9. Boîtier de liaison croisée (1) selon la revendication 1, dans lequel l'unité de détection thermique (27) est configurée pour mesurer un paramètre représentatif de la température de la pince conductrice (13a, 13b, 13c, 14a, 14b, 14c) ou du pont de barre de mise à la terre (6ab, 6bc, 6ca) situé à l'intérieur du logement étanche à l'eau (11).

10. Boîtier de liaison croisée (1) selon la revendication 1, dans lequel le système de surveillance (20) comprend une unité de détection thermique supplémentaire (27a) agencée sur la surface externe (11b) du logement étanche à l'eau (11) à une distance de la zone de contact de logement (CSh) de la surface interne (11a), dans lequel l'unité de détection thermique supplémentaire (27a) est configurée pour mesurer une température ambiante du logement.

11. Procédé d'installation ultérieure d'un système de surveillance (20) sur un boîtier de liaison croisée (1) comprenant les étapes suivantes :
- la fourniture d'un moyen de transfert de chaleur (23a, 23b, 23c, 24a, 24b, 24c, 25ab, 25bc, 25ca) présentant une première extrémité et une seconde extrémité ;
- la connexion thermique de la première extrémité du moyen de transfert de chaleur (23a, 23b, 23c, 24a, 24b, 24c, 25ab, 25bc, 25ca) à une pince conductrice (13a, 13b, 13c, 14a, 14b, 14c) ou à un pont de barre de mise à la terre (6ab, 6bc, 6ca) ;
- la connexion thermique de la seconde extrémité du moyen de transfert de chaleur (23a, 23b, 23c, 24a, 24b, 24c, 25ab, 25bc, 25ca) à une zone de contact de logement (CSh) d'une surface interne (11a) du logement étanche à l'eau (11) ;
- l'isolation électrique de la pince conductrice (13a, 13b, 13c, 14a, 14b, 14c) ou du pont de barre de mise à la terre (6ab, 6bc, 6ca) du logement (11) ;
- la disposition d'une unité de détection thermique (27) sur une surface externe (11b) du logement étanche à l'eau (11) adjacente à la zone de contact de logement (CSh) de la surface interne (11a).
